# EUROPÄISCHE PATENTSCHRIFT

(11) **EP 1 893 651 B1**
(45) Veröffentlichungstag und Bekanntmachung des Hinweises auf die Patenterteilung: **25.03.2009**
(21) Anmeldenummer: 06725736.0
(22) Anmeldetag: 12.04.2006
(51) Int. Cl.: C08B 1/00, C08J 3/09

(54) **LÖSLICHKEIT VON CELLULOSE IN IONISCHEN FLÜSSIGKEITEN UNTER ZUGABE VON AMINBASE**
SOLUBILITY OF CELLULOSE IN IONIC LIQUIDS WITH ADDITION OF AMINO BASES
SOLUBILITE DE LA CELLULOSE DANS DES LIQUIDES IONIQUES, SOUS APPORT DE BASE AMINE

(30) Priorität: 15.04.2005 DE 102005017733
(43) Veröffentlichungstag der Anmeldung: 05.03.2008
(73) Patentinhaber: BASF SE, 67056 Ludwigshafen (DE)
(72) Erfinder: MAASE, Matthias, 67346 Speyer (DE); STEGMANN, Veit, 68167 Mannheim (DE)
(74) Vertreter: Isenbruck, Günter
(86) Internationale Anmeldenummer: PCT/EP2006/061560
(87) Internationale Veröffentlichungsnummer: WO 2006/108861

(56) Entgegenhaltungen:
- WO-A-03/029329
- US-A- 1 924 238
- US-A- 1 943 176
- E. HUSEMANN, E. SIEFERT: "N-Äthyl-pyridinium-chlorid als Lösungsmittel und Reaktionsmedium für Cellulose" MAKROMOLEKULARE CHEMIE, Bd. 128, Nr. 3178, 1969, Seiten 288-291, XP009073037 CHHUETHIG UND WEPF, BASEL

## Beschreibung

Die vorliegende Erfindung betrifft eine Lösung aus Cellulose und einer ionischen Flüssigkeit als Lösemittel, Verfahren zur deren Herstellung sowie deren Verwendung.

Cellulose ist ein sehr vielseitig verwendbarer Rohstoff. Für die Textilindustrie ist Cellulose beispielsweise der wichtigste Bestandteil der Faserrohstoffe, insbesondere der Baumwolle.

Cellulose kann unverändert oder nach physikalischer oder chemischer Behandlung eingesetzt werden. Für die beiden letzt genannten Fällen ist dabei von Vorteil, wenn Cellulose in einem Lösemittel in möglichst vollständig gelöster Form vorliegt. In den meisten Lösemitteln ist Cellulose jedoch unlöslich.

In manchen Kupferlösungen ist Cellulose als Kupfer-Chelat-Komplex löslich. Durch Ausfällen der Cellulose kann die so genannte regenerierte Cellulose erhalten werden. Solche Kupferlösungen sind jedoch wenig geeignet, um als Lösemittel für Cellulose bei deren physikalischer oder chemischer Behandlung zu dienen.

Daher wurde sehr früh schon als Lösemittel für Cellulose die in der Literatur unter anderem als ionische Flüssigkeiten bekannten Systeme vorgeschlagen.

So beschreibt US-A 1,943,176 die Auflösung von Cellulose in Benzylpyridiniumchlorid.

Bei Benzylpyridiniumchlorid als Beispiel einer ionischen Flüssigkeit handelt es sich um ein Salz, das schon bei vergleichsweise geringen Temperaturen in geschmolzener Form und somit als Flüssigkeit vorliegt.

Ionische Flüssigkeiten gewinnen als Lösungsmittel, z.B. bei Durchführung chemischer Reaktionen, zunehmend an Bedeutung. Peter Wasserscheidt, Angew. Chem. 2000, 112, 3926-3945 gibt beispielsweise einen Überblick über den Einsatz ionischer Flüssigkeiten bei der Übergangsmetallkatalyse.

Ionische Flüssigkeiten, die bereits bei Raumtemperatur in flüssigem Aggregatszustand vorliegen, werden beispielsweise von K.N. Marsh et al., Fluid Phase Equilibria 219 (2004), 93-98 und J.G. Huddleston et al., Green Chemistry 2001, 3, 156-164 beschrieben.

DE-A 102 02 838 beschreibt die Verwendung von ionischen Flüssigkeiten zur Abtrennung von Säuren aus chemischen Gemischen.

Aufgrund der guten Lösemitteleigenschaften ionischer Flüssigkeiten wird auch in der neueren internationalen Anmeldung WO-A 03/029329 deren Verwendung zum Auflösen von Cellulose vorgeschlagen. Hierin wird jedoch hervorgehoben, dass eine diesbezügliche Lösung aus Cellulose und einer ionischen Flüssigkeit als Lösemittel im Wesentlichen keine stickstoffhaltigen Basen enthalten darf.

Obwohl die in WO-A 03/029329 beschriebenen Charakteristika der Cellulose enthaltenen Lösung sowie deren Herstellung gute Ergebnisse aufweisen, besteht ein Bedarf verbesserte Lösungen bereitzustellen.

Eine Aufgabe der vorliegenden Erfindung liegt somit darin, eine Lösung aus aufgelöster Cellulose bereitzustellen, die verbesserte Eigenschaften zeigt.

Die Aufgabe wird gelöst durch eine Lösung enthaltend Cellulose, eine ionische Flüssigkeit enthaltend Anionen und Kationen als Lösemittel und 6 bis 30 Gew.% einer stickstoffhaltigen Base bezogen auf das Gesamtgewicht der Lösung
wobei die ionische Flüssigkeit mindestens ein Kation der Formel (IVe) enthält 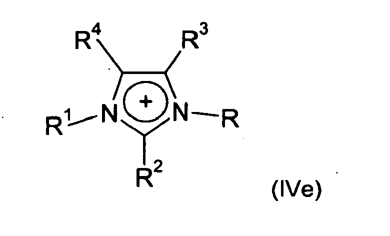 sowie Oligomere, die diese Struktur enthalten, wobei
• der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen steht; und
• die Reste R¹ bis R⁴ unabhängig voneinander für Wasserstoff, eine SulfoGruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen und wobei die Reste R¹ bis R⁴, welche in der oben genannten Formel (IVe) an ein Kohlenstoffatom (und nicht an ein Heteroatom) gebunden sind, zusätzlich auch für Halogen oder eine funktionelle Gruppe stehen können; oder
zwei benachbarte Reste aus der Reihe R¹ bis R⁴ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen können.

Es wurde gefunden, dass bei Zusatz einer stickstoffhaltigen Base im angegebenen Konzentrationsbereich eine Verbesserung der Eigenschaften der Lösung beispielsweise in Bezug auf die Lösungsgeschwindigkeit der Cellulose, einer niedrigeren Viskosität, sowie der Herabsetzung des Schmelzpunktes der ionischen Flüssigkeit zumindest teilweise erreicht werden kann.

Die zu lösende Cellulose kann beispielsweise aus regenerierter Cellulose, faseriger Cellulose, Holzfasern, Linterstoff, Baumwolle oder Papier stammen.

Es ist bevorzugt, dass in der Lösung gemäß der vorliegende Erfindung Cellulose mit mehr als 1 Gew.% bezogen auf das Gesamtgewicht der Lösung vollständig gelöst werden. Mehr bevorzugt werden mehr als 3% Gew.-%, besonders bevorzugt mehr als 5 Gew.% und insbesondere bevorzugt mindestens 7 Gew.% bezogen auf das Gesamtgewicht der Lösung vollständig gelöst werden.

Geeigneterweise können bis zu 35 Gew.% Cellulose bezogen auf das Gesamtgewicht der Lösung vollständig gelöst werden. Weiterhin können bis zu 25 Gew.% Cellulose bezogen auf das Gesamtgewicht der Lösung vollständig gelöst werden. Insbesondere geeignet für bestimmte Anwendungen sind Lösungen, bei denen Cellulose mit bis zu 15 Gew.% vollständig gelöst sind.

Ionische Flüssigkeiten im Sinne der vorliegenden Erfindung sind vorzugsweise Salze der allgemeinen Formel
(A) Salze der allgemeinen Formel (I) 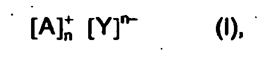 in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
(B) gemischte Salze der allgemeinen Formeln (II)

   [A¹]⁺[A²]⁺ [Y]ⁿ⁻ (IIa),

   wobei n = 2;

   [A¹]⁺[A²]⁺[A³]⁺ [Y]ⁿ⁻ (IIb),

   wobei n = 3; oder

   [A¹]⁺[A²]⁺[A³]+[A⁴]⁺ [Y]ⁿ⁻ (IIc),

   wobei n = 4 und
   wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter (A) genannte Bedeutung besitzt; oder
(C) gemischte Salze der allgemeinen Formeln (III)

   [A¹]⁺[A²]⁺[A³]⁺[M¹]⁺ [Y]ⁿ⁻ (IIIa),

   wobei n = 4;

   [A¹]⁺[A²]⁺[M¹]⁺[M²]⁺[Y]ⁿ⁻ (IIIb),

   wobei n = 4;

   [A¹]⁺[M¹]⁺[M²]⁺[M³]⁺ [Y]ⁿ⁻ (IIIc),

   wobei n = 4;

   [A¹]⁺[A²]⁺[M¹]⁺ [Y]ⁿ⁻ (IIId),

   wobei n = 3;

   [A¹]⁺[M¹]⁺[M²]⁺ [Y]ⁿ⁻ (IIIe),

   wobei n = 3;

   [A¹]⁺[M¹]⁺ [Y]ⁿ⁻ (IIIf),

   wobei n = 2;

   [A¹]⁺[A²]⁺[M⁴]²⁺ [Y]ⁿ⁻ (IIIg),

   wobei n = 4;

   [A¹]⁺[M¹]⁺[M⁴]²⁺ [Y]ⁿ⁻ (IIIh),

   wobei n = 4;

   [A¹]⁺[M⁵]³⁺ [Y]ⁿ⁻ (IIIi),

   wobei n = 4; oder

   [A¹]⁺[M⁴]²⁺ [Y]ⁿ⁻ (IIIj),

   wobei n = 3 und
wobei [A¹]⁺, [A²]⁺ und [A³]⁺ unabhängig voneinander aus den für [A]⁺ genannten Gruppen ausgewählt sind, [Y]ⁿ⁻ die unter (A) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten.

Vorzugsweise besitzen die ionischen Flüssigkeiten einen Schmelzpunkt von weniger als 180°C. Weiterhin bevorzugt liegt der Schmelzpunkt in einem Bereich von -50°C bis 150°C, mehr bevorzugt im Bereich von -20°C bis 120°C und weiterhin mehr bevorzugt unter 100°C.

Verbindungen, die sich zur Bildung des Kations [A]⁺ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder StickstoffHeterocyclus' ein Kation erzeugt werden. Die Quaternisierung kann durch Alkylierung des Stickstoff atoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen lonenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926- 3945 und der darin zitierten Literatur beschrieben.

Geeignete Alkylreste, mit denen das Stickstoffatom in den Aminen oder Stickstoff-Heterocyclen beispielsweise quaternisiert sein kann, sind C₁ bis C₁₈ -Alkyl, bevorzugt C₁ bis C₁₀-Alkyl, besonders bevorzugt C₁ bis C₆-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol und insbesondere unter 250 g/mol.

Weiterhin sind solche Kationen bevorzugt, die ausgewählt sind aus den Verbindungen der Formeln (IVa) bis (IVw), wobei die ionische Flüssigkeit mindestens ein Kation der Formel (IVe) sowie Oligomere, die diese Struktur enthalten, enthält. 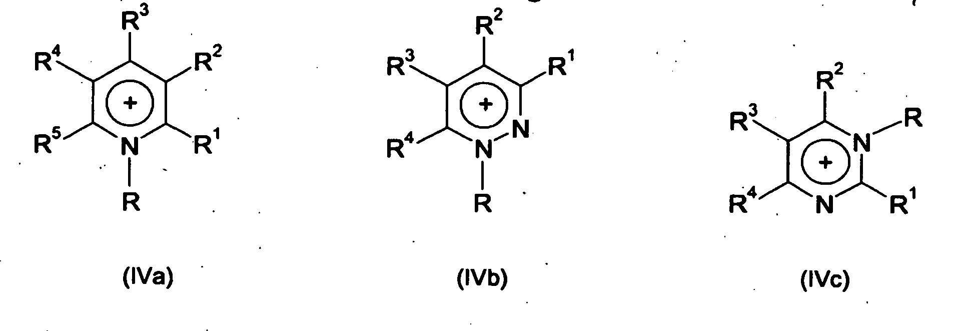 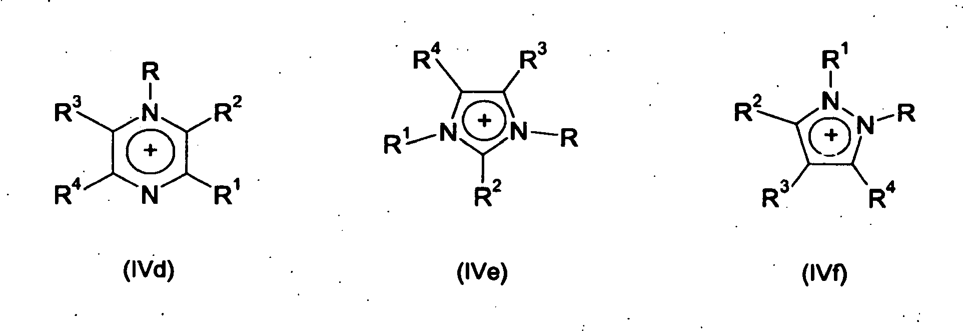 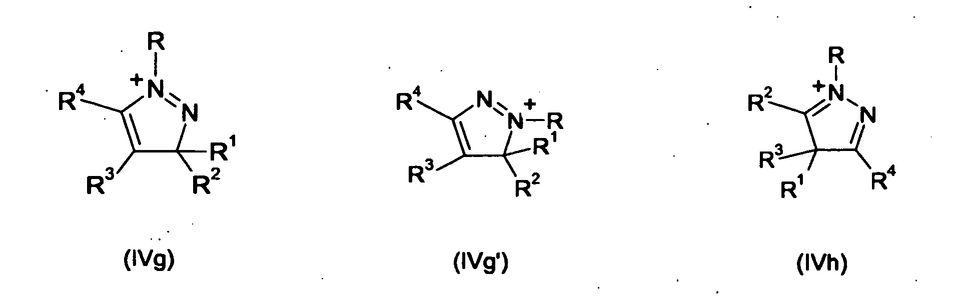 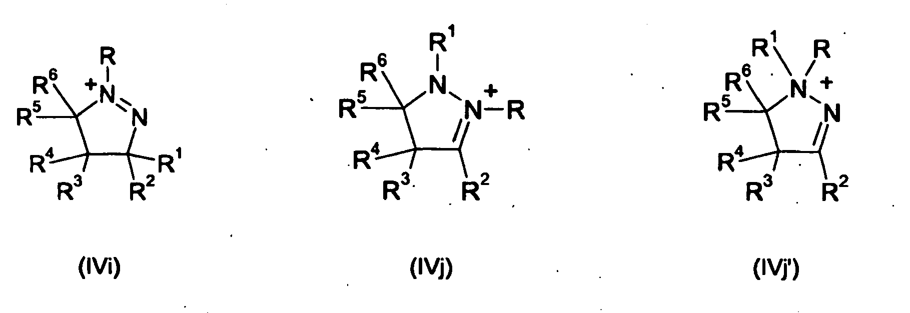 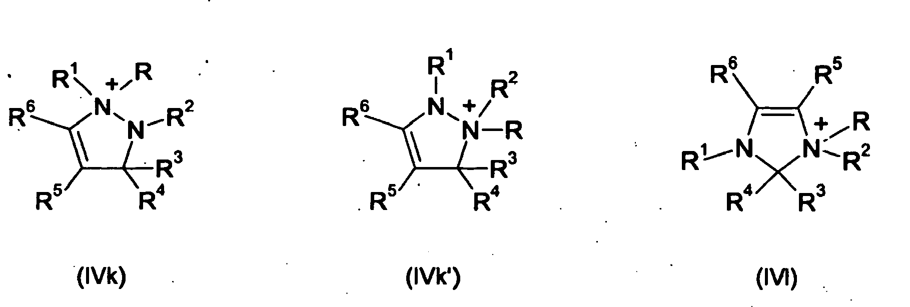 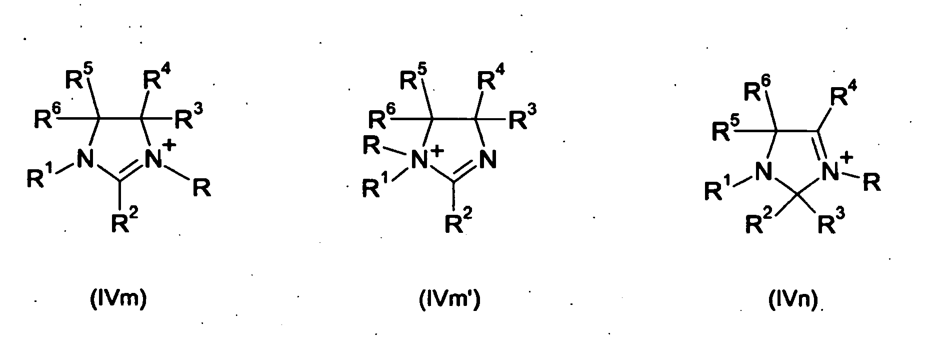 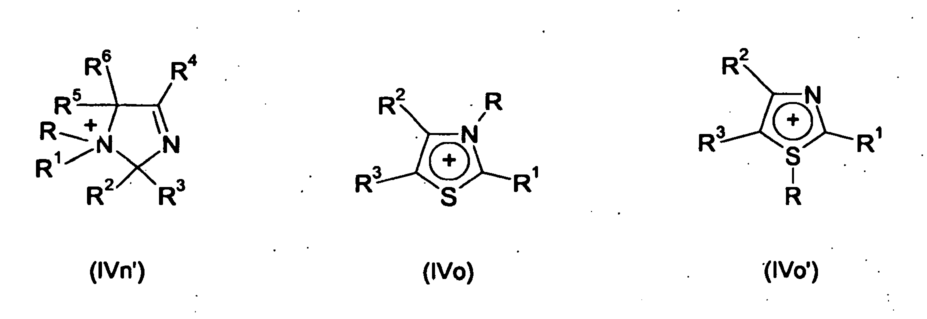 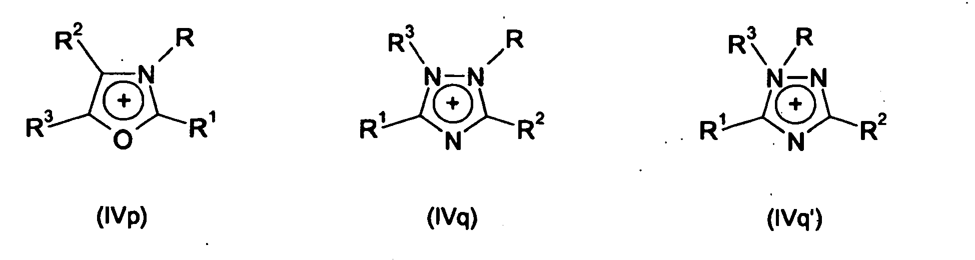 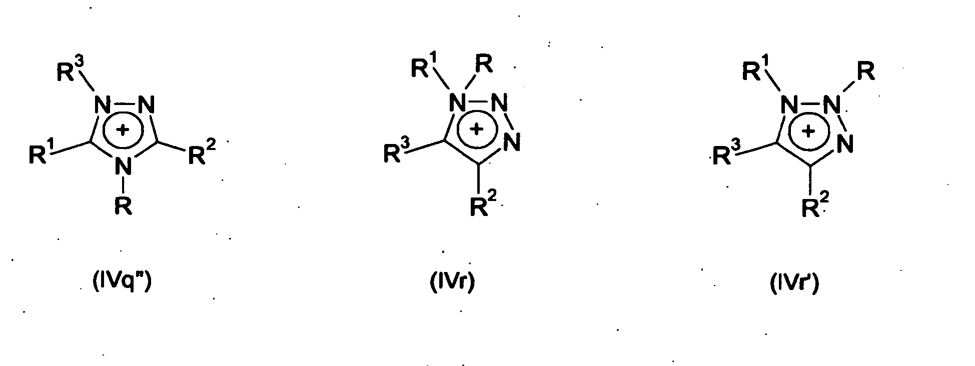 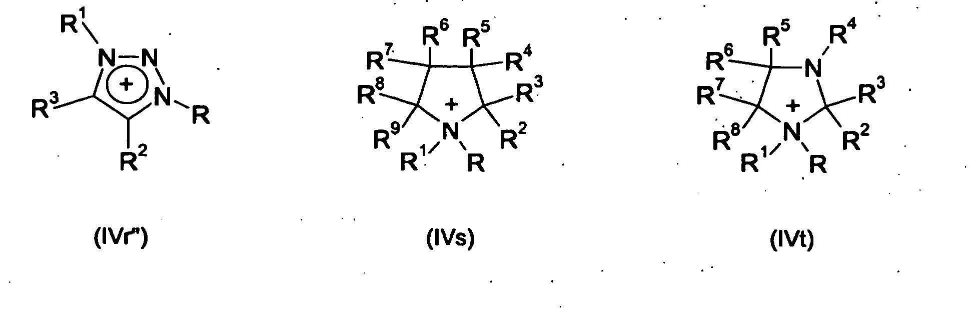 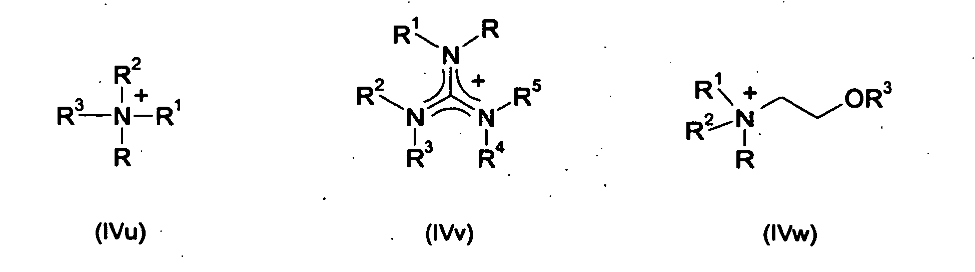 sowie Oligomere, die diese Strukturen enthalten.

Weitere geeignete Kationen sind Verbindungen der allgemeinen Formel (IVx) und (IVy) 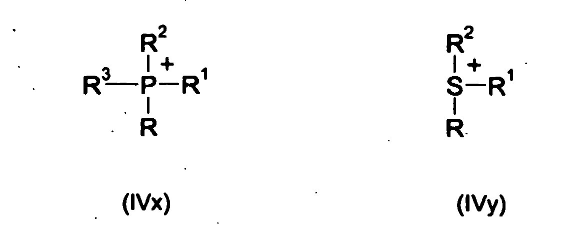 sowie Oligomere, die diese Struktur enthalten.

In den oben genannten Formeln (IVa) bis (IVy) stehen
• der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen; und
• die Reste R¹ bis R⁹ unabhängig voneinander für Wasserstoff, eine SulfoGruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen, wobei die Reste R¹ bis R⁹, welche in den oben genannten Formeln (IV) an ein Kohlenstoffatom (und nicht an ein Heteroatom) gebunden sind, zusätzlich auch für Halogen oder eine funktionelle Gruppe stehen können; oder
zwei benachbarte Reste aus der Reihe R¹ bis R⁹ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Bevorzugt sind Kationen der Formeln (IVb) bis (IVy).

Als Heteroatome kommen bei der Definition der Reste R und R¹ bis R⁹ prinzipiell alle Heteroatome in Frage, welche in der Lage sind, formell eine -CH₂-, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂-, -NR'-, -N=, -PR'-, -PR'₂ und -SiR'₂- genannt, wobei es sich bei den Resten R' um den verbleibenden Teil des Kohlenstoff enthaltenden Rests handelt. Die Reste R¹ bis R⁹ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe), -NH₂ (Amino), =NH (Imino), -COOH (Carboxy), -CONH₂ (Carboxamid), -SO₃H (Sulfo) und -CN (Cyano) genannt. Fuktionelle Gruppen und Heteroatome können auch direkt benachbart sein, so dass auch Kombinationen aus mehreren benachbarten Atomen, wie etwa -O-(Ether), -S- (Thioether), -COO- (Ester), -CONH- (sekundäres Amid) oder -CONR'-(tertiäres Amid), mit umfasst sind, beispielsweise Di-(C₁-C₄-Alkyl)-amino, C₁-C₄-Alkyloxycarbonyl oder C₁-C₄-Alkyloxy.

Als Halogene seien Fluor, Chlor, Brom und Iod genannt.

Bevorzugt steht der Rest R für
• unverzweigtes oder verzweigtes, unsubstituiertes oder ein bis mehrfach mit Hydroxy, Halogen, Phenyl, Cyano, C₁- bis C₆-Alkoxycarbonyl und/oder Sulfonsäure substituiertes C₁- bis C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
• Glykole, Butylenglykole und deren Oligomere mit 1 bis 100 Einheiten und einem Wasserstoff oder einem, C₁- bis C₈-Alkyl als Endgruppe, wie beispielsweise R^{A}O-(CHR^{B}-CH₂-O)ₙ-CHR^{B}-CH₂- oder R^{A}O-(CH₂CH₂CH₂CH₂O)ₙ-CH₂CH₂CH₂CH₂O- mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
• Vinyl; und
• N,N-Di-C₁- bis C₆-alkyl-amino, wie beispielsweise N,N-Dimethylamino und N,N-Diethylamino.

Für den Fall, dass das Kation ein Pyridiniumion der Formel (IVa) ist, ist bevorzugt, dass R nicht Benzyl, Allyl, Ethyl oder Ethoxycarbonylmethyl ist, wenn R¹ bis R⁵ H ist.

Besonders bevorzugt steht der Rest R für unverzweigtes und unsubstituiertes C₁- bis C₁₈-Alkyl wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für CH₃O-(CH₂CH₂O)ₙ-CH₂CH₂-und CH₃CH₂O-(CH₂CH₂O)ₙ-CH₂CH₂- mit n gleich 0 bis 3.

Bevorzugt stehen die Reste R¹ bis R⁹ unabhängig voneinander für
• Wasserstoff;
• Halogen;
• eine funktionelle Gruppe;
• gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₁-C₁₈-Alkyl;
• gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂-C₁₈-Alkenyl;
• gegebenenfalls durch funktionelle Gruppen, Aryl, Alkyl, Aryloxy, Alkyloxy, Halogen, Heteroatome und/oder Heterocyclen substituiertes C₆-C₁₂-Aryl;
• gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl;
• gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl; oder
• einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder
zwei benachbarte Reste zusammen für
• einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch funktionelle Gruppen, Aryl, Alkyl, Aryloxy, Alkyloxy, Halogen, Heteroatome und/oder Heterocyclen substituiertem C₁- bis C₁₈-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl; 3,3-Dimethyl-2-butyl, Heptyl, Octyl, 2-Etylhexyl, 2,4,4-Trimethylpentyl, 1,1,3,3-Tetramethylbutyl, 1-Nonyl, 1-Decyl, 1-Undecyl, 1-Dodecyl, 1-tridecyl 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (phenylethyl), Diphenylmethyl (Benzhydryl), Triphenylmethyl, 1-Phenylethyl, 2-Phenylethyl, 3-Phenylpropyl, α,α-Dimethylbenzyl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl; 1,2-Di-(methoxycarbonyl)-ethyl, Methoxy, Ethoxy, Formyl, 1,3-Dioxolan-2-yl, 1,3-Dioxan-2-yl, 2-Methyl-1,3-dioxolan-2-yl, 4-Methyl-1,3-dioxolan-2-yl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Acetyl, CₙF_{2(n-a)+(1-b)}H_{2a+b} mit n gleich 1 bis 30, 0 ≤ a ≤ n und b = 0 oder 1 (beispielsweise CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-ethyl, 2-(Ethoxycarbonyl)-ethyl, 2-(n-Butoxycarbonyl)-ethyl, Butylthiomethyl, 2-Dodecylthioethyl, 2-Phenylthioethyl, 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-dioxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxapentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₂- bis C₁₈-Alkenyl handelt es sich bevorzugt um Vinyl, 2-Propenyl, 3-Butenyl, cis-2-Butenyl, trans-2-Butenyl oder CₙF_{2(n-a)-(1-b)}H_{2a-b} mit n ≤ 30, 0 ≤ a ≤ n und b = 0 oder 1.

Bei gegebenenfalls durch funktionelle Gruppen, Aryl, Alkyl, Aryloxy, Alkyloxy, Halogen, Heteroatome und/oder Heterocyclen substituiertes C₆- bis C₁₂-Aryl handelt es sich bevorzugt um Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder C₆F₍₅₋ₐ₎Hₐ mit 0 ≤ a ≤ 5.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkyl handelt es sich bevorzugt um Cyclopentyl, Cyclohexyl, Cyclooctyl, Cyclododecyl, Methylcydopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, CₙF_{2(n-a)-(1-b)}H_{2a-b} mit n ≤ 30, 0 ≤ a ≤ n und b = 0 oder 1 sowie ein gesättigtes oder ungesättigtes bicyclisches System wie z.B. Norbornyl oder Norbornenyl.

Bei gegebenenfalls durch funktionelle Gruppen, Aryl, Alkyl, Aryloxy, Alkyloxy, Halogen, Heteroatome und/oder Heterocyclen substituiertes C₅- bis C₁₂-Cycloalkenyl handelt es sich bevorzugt um 3-Cyclopentenyl, 2-Cyclohexenyl, 3-Cyclohexenyl, 2,5-Cyclohexadienyl oder CₙF_{2(n-a)-3(1-b)}H_{2a-3b} mit n ≤ 30, 0 ≤ a ≤ n und b = 0 oder 1.

Bei einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff- , Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff-und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste R¹ bis R⁹ unabhängig voneinander für
• Wasserstoff;
• unverzweigtes oder verzweigtes, unsubstituiertes oder ein bis mehrfach mit Hydroxy, Halogen, Phenyl, Cyano, C₁- bis C₆-Alkoxycarbonyl und/oder Sulfonsäure substituiertes C₁- bis C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure;
• Glykole, Butylenglykole und deren Oligomere mit 1 bis 100 Einheiten und einem Wasserstoff oder einem C₁- bis C₈-Alkyl als Endgruppe, wie beispielsweise R^{A}O-(CHR^{B}-CH₂-O)ₙ-CHR^{B}-CH₂- oder R^{A}O-(CH₂CH₂CH₂CH₂O)ₙ-CH₂CH₂CH₂CH₂O- mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
• Vinyl; und
• N,N-Di-C₁- bis C₆-alkyl-amino, wie beispielsweise N,N-Dimethylamino und N,N-Diethylamino.

Ganz besonders bevorzugt stehen die Reste R¹ bis R⁹ unabhängig voneinander für Wasserstoff oder C₁- bis C₁₈-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für CH₃O-(CH₂CH₂O)ₙ-CH₂CH₂- und CH₃CH₂O-(CH₂CH₂O)ₙ-CH₂CH₂- mit n gleich 0 bis 3.

Ganz besonders bevorzugt setzt man als Pyridiniumionen (IVa) solche ein, bei denen
• einer der Reste R¹ bis R⁵ Methyl, Ethyl oder Chlor ist und die verbleibenden Reste R¹ bis R⁵ Wasserstoff sind;
• R³ Dimethylamino ist und die verbleibenden Reste R¹, R², R⁴ und R⁵ Wasserstoff sind;
• alle Reste R¹ bis R⁵ Wasserstoff sind;
• R² Carboxy oder Carboxamid ist und die verbleibenden Reste R¹, R², R⁴ und R⁵ Wasserstoff sind; oder
• R¹ und R² oder R² und R³ 1,4-Buta-1,3-dienylen ist und die verbleibenden Reste R¹, R², R⁴ und R⁵ Wasserstoff sind;
und insbesondere solche, bei denen
• R¹ bis R⁵ Wasserstoff sind; oder
• einer der Reste R¹ bis R⁵ Methyl oder Ethyl ist und die verbleibenden Reste R¹, bis R⁵ Wasserstoff sind.

Als ganz besonders bevorzugte Pyridiniumionen (IVa) seien genannt 1-Methylpyridinium, 1-Ethylpyridinium, 1-(1-Butyl)pyridinium, 1-(1-Hexyl)pyridinium, 1-(1-Octyl)-pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methytpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-thyl-pyridinium und 1-(1-Hexadecyl)-2-methyl-3-ethyl-pyridinium.

Ganz besonders bevorzugt setzt man als Pyridaziniumionen (IVb) solche ein, bei denen
• R¹ bis R⁴ Wasserstoff sind; oder
• einer der Reste R¹ bis R⁴ Methyl oder Ethyl ist und die verbleibenden Reste R¹ bis R⁴ Wasserstoff sind.

Ganz besonders bevorzugt setzt man als Pyrimidiniumionen (IVc) solche ein, bei denen
• R¹ Wasserstoff, Methyl oder Ethyl ist und R² bis R⁴ unabhängig voneinander Wasserstoff oder Methyl sind; oder
• R¹ Wasserstoff, Methyl oder Ethyl ist, R² und R⁴ Methyl sind und R³ Wasserstoff ist.

Ganz besonders bevorzugt setzt man als Pyraziniumionen (IVd) solche ein, bei denen
• R¹ Wasserstoff, Methyl oder Ethyl ist und R² bis R⁴ unabhängig voneinander Wasserstoff oder Methyl sind;
• R¹ Wasserstoff, Methyl oder Ethyl ist, R² und R⁴ Methyl sind und R³ Wasserstoff ist;
• R¹ bis R⁴ Methyl sind; oder
• R¹ bis R⁴ Methyl Wasserstoff sind.

Ganz besonders bevorzugt setzt man als Imidazoliumionen (IVe) solche ein, bei denen
• R¹ Wasserstoff, Methyl, Ethyl, 1-Propyl, 1-Butyl, 1-Pentyl, 1-Hexyl, 1-Octyl, 2-Hydroxyethyl oder 2-Cyanoethyl und R² bis R⁴ unabhängig voneinander Wasserstoff, Methyl oder Ethyl sind.

Als ganz besonders bevorzugte Imidazoliumionen (IVe) seien genannt 1-Methylimidazolium, 1-Ethylimidazolium, 1-(1-Butyl)-imidazolium, 1-(1-Octyl)imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methytimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl-imidazolium.

Ganz besonders bevorzugt setzt man als Pyrazoliumionen (IVf), (IVg) beziehungsweise (IVg') solche ein, bei denen
• R¹ Wasserstoff, Methyl oder Ethyl ist und R² bis R⁴ unabhängig voneinander Wasserstoff oder Methyl sind.

Ganz besonders bevorzugt setzt man als Pyrazoliumionen (IVh) solche ein, bei denen
• R¹ bis R⁴ unabhängig voneinander Wasserstoff oder Methyl sind.

Ganz besonders bevorzugt setzt man als 1-Pyrazoliniumionen (IVi) solche ein, bei denen
• unabhängig voneinander R¹ bis R⁶ Wasserstoff oder Methyl sind.

Ganz besonders bevorzugt setzt man als 2-Pyrazoliniumionen (IVj) beziehungsweise (IVj') solche ein, bei denen
• R¹ Wasserstoff, Methyl, Ethyl oder Phenyl ist und R² bis R⁶ unabhängig voneinander Wasserstoff oder Methyl sind.

Ganz besonders bevorzugt setzt man als 3-Pyrazoliniumionen (IVk) beziehungsweise (IVk') solche ein, bei denen
• R¹ und R² unabhängig voneinander Wasserstoff, Methyl, Ethyl oder Phenyl sind und R³ bis R⁶ unabhängig voneinander Wasserstoff oder Methyl sind.

Ganz besonders bevorzugt setzt man als Imidazoliniumionen (IVI) solche ein, bei denen
• R¹ und R² unabhängig voneinander Wasserstoff, Methyl, Ethyl, 1-Butyl oder Phenyl sind, R³ und R⁴ unabhängig voneinander Wasserstoff, Methyl oder Ethyl sind und R⁵ und R⁶ unabhängig voneinander Wasserstoff oder Methyl sind.

Ganz besonders bevorzugt setzt man als Imidazoliniumionen (IVm) beziehungsweise (IVm') solche ein, bei denen
• R¹ und R² unabhängig voneinander Wasserstoff, Methyl oder Ethyl sind und R³ bis R⁶ unabhängig voneinander Wasserstoff oder Methyl sind.

Ganz besonders bevorzugt setzt man als Imidazoliniumionen (IVn) beziehungsweise (IVn') solche ein, bei denen
• R¹ bis R³ unabhängig voneinander Wasserstoff, Methyl oder Ethyl sind und R⁴ bis R⁶ unabhängig voneinander Wasserstoff oder Methyl sind.

Ganz besonders bevorzugt setzt man als Thiazoliumionen (IVo) beziehungsweise (I-Vo') sowie als Oxazoliumionen (IVp) solche ein, bei denen
• R¹ Wasserstoff, Methyl, Ethyl oder Phenyl ist und R² und R³ unabhängig voneinander Wasserstoff oder Methyl sind.

Ganz besonders bevorzugt setzt man als 1,2,4-Triazoliumionen (IVq), (IVq') beziehungsweise (IVq") solche ein, bei denen
• R¹ und R² unabhängig voneinander Wasserstoff, Methyl, Ethyl oder Phenyl sind und R³ Wasserstoff, Methyl oder Phenyl, ist.

Ganz besonders bevorzugt setzt man als 1,2,3-Triazoliumionen (IVr), (IVr') beziehungsweise (IVr") solche ein, bei denen
• R¹ Wasserstoff, Methyl oder Ethyl ist und R² und R³ unabhängig voneinander Wasserstoff oder Methyl sind, oder R² und R³ zusammen 1,4-Buta-1,3-dienylen ist.

Ganz besonders bevorzugt setzt man als Pyrrolidiniumionen (IVs) solche ein, bei denen
• R¹ Wasserstoff, Methyl, Ethyl oder Phenyl ist und R² bis R⁹ unabhängig voneinander Wasserstoff oder Methyl sind.

Ganz besonders bevorzugt setzt man als Imidazolidiniumionen (IVt) solche ein, bei denen
• R¹ und R⁴ unabhängig voneinander Wasserstoff, Methyl, Ethyl oder Phenyl sind und R² und R³ sowie R⁵ bis R⁸ unabhängig voneinander Wasserstoff oder Methyl sind.

Ganz besonders bevorzugt setzt man als Ammoniumionen (IVu) solche ein, bei denen
• R¹ bis R³ unabhängig voneinander C₁- bis C₁₈-Alkyl sind; oder
• R¹ und R² zusammen 1,5-Pentylen oder 3-Oxa-1,5-pentylen sind und R³ C₁-C₁₈-Alkyl, 2-Hydroxyethyl oder 2-Cyanoethyl ist.

Als ganz besonders bevorzugte Ammoniumionen (IVu) seien genannt Methyl-tri-(1-butyl)-ammonium, N,N-Dimethylpiperidinium und N,N-Dimethylmorpholinium.

Beispiele für die tertiären Amine, von denen sich die quatären Ammoniumionen der allgemeinen Formel (IVu) durch Quaternisierung mit den genannten Resten R ableiten, sind Diethyl-n-butylamin, Diethyl-tert-butylamin, Diethyl-n-pentylamin, Diethylhexylamin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Di-isopropylpentylamin, Di-iso-propylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butylpyrrolidin, N-sek-Butylpyrrodidin, N-tert-Butylpyrrolidin, N-n-Pentylpyrrolidin, N,N-Dimethylcyclohexylamin, N,N-Diethylcydohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Di-n-Butylphenylamin.

Bevorzugte tertiäre Amine (IVu) sind Di-iso-propylethylamin, Diethyl-tert-butylamin, Di-iso-propylbutylamin, Di-n-butyl-n-pentylamin, N,N-Di-n-butylcydohexylamin sowie tertiäre Amine aus Pentylisomeren.

Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.

Ganz besonders bevorzugt setzt man als Guanidiniumionen (IVv) solche ein, bei denen
• R¹ bis R⁵ Methyl sind.

Als ganz besonders bevorzugtes Guanidiniumion (IVv) sei genannt N,N,N',N',N",N"-Hexamethylguanidinium.

Ganz besonders bevorzugt setzt man als Choliniumionen (IVw) solche ein, bei denen
• R¹ und R² unabhängig voneinander Methyl, Ethyl, 1-Butyl oder 1-Octyl sind und R³ Wasserstoff, Methyl, Ethyl, Acetyl, -SO₂OH oder -PO(OH)₂ ist;
• R¹ Methyl, Ethyl, 1-Butyl oder 1-Octyl ist, R² eine -CH₂CH₂OR⁴-Gruppe ist und R³ und R⁴ unabhängig voneinander Wasserstoff, Methyl, Ethyl, Acetyl, -SO₂OH oder-PO(OH)₂ sind; oder
• R¹ eine -CH₂-CH₂-OR⁴-Gruppe ist, R² eine -CH₂-CH₂-OR⁵-Gruppe ist und R³ bis R⁵ unabhängig voneinander Wasserstoff, Methyl, Ethyl, Acetyl, -SO₂OH oder -PO(OH)₂ sind.

Besonders bevorzugte Choliniumionen (IVw) sind solche, bei denen R³ ausgewählt ist aus Wasserstoff, Methyl, Ethyl, Acetyl, 5-Methoxy-3-oxa-pentyl, 8-Methoxy-3,6-dioxaoctyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Ganz besonders bevorzugt setzt man als Phosphoniumionen (IVx) solche ein, bei denen
• R¹ bis R³ unabhängig voneinander C₁-C₁₈-Alkyl, insbesondere Butyl, Isobutyl, 1-Hexyl oder 1-Octyl sind.

Unter den vorstehend genannten heterocyclischen Kationen sind die Pyridiniumionen, Pyrazolinium-, Pyrazoliumionen und die Imidazolinium- sowie die Imidazoliumionen bevorzugt. Weiterhin sind Ammoniumionen bevorzugt.

Insbesondere bevorzugt sind 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethyl-pyridinium, 1-(1-Dodecyl)-methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium.

Bei den in den Formeln (IIIa) bis (IIIj) genannten Metallkationen [M¹]⁺, [M²]⁺, [M³]⁺, [M⁴]²⁺ und [M⁵]³⁺ handelt es sich im Allgemeinen um Metallkationen der 1., 2., 6., 7., 8., 9., 10., 11., 12. und 13. Gruppe des Periodensystems. Geeignete Metallkationen sind beispielsweise Li⁺, Na⁺, K⁺, Cs⁺ Mg²⁺, Ca²⁺, Ba²⁺, Cr³⁺, Fe²⁺, Fe³⁺, Co²⁺, Ni²⁺, Cu²⁺, Ag⁺, Zn²⁺ und Al³⁺.

Als Anionen sind prinzipiell alle Anionen einsetzbar.

Das Anion [Y]ⁿ⁻ der ionischen Flüssigkeit ist beispielsweise ausgewählt aus
• der Gruppe der Halogenide und halogenhaltigen Verbindungen der Formel: F⁻, Cl⁻, Br⁻, r, BF₄⁻ , PF₆⁻, AlCl₄⁻, Al₂Cl₇⁻, AlCl₁₀⁻, AlBr₄⁻, FeCl₄⁻, BCl₄⁻, SbF₆⁻, AsF₆⁻, ZnCl₃⁻, SnCl₃⁻, CuCl₂⁻, CF₃SO₃⁻, (CF₃SO₃)₂N⁻, CF₃CO₂⁻. CCl₃CO₂⁻, CN⁻, SCN⁻, OCN⁻
• der Gruppe der Sulfate, Sulfite und Sulfonate der allgemeinen Formel: SO₄²⁻, HSO₄⁻, SO₃²⁻ , HSO₃⁻, R^{a}OSO₃⁻, R^{a}SO₃⁻
• der Gruppe der Phosphate der allgemeinen Formel PO₄³⁻, HPO₄²⁻, H₂PO₄⁻, R^{a}PO₄²⁻, HR^{a}PO₄⁻, R^{a}R^{b}PO₄⁻
• der Gruppe der Phosphonate und Phosphinate der allgemeinen Formel: R^{a}HPO₃⁻,R^{a}R^{b}PO₂⁻, R^{a}R^{b}PO₃⁻
• der Gruppe der Phosphite der allgemeinen Formel: PO₃³⁻, HPO₃²⁻,H₂O₃⁻, R^{a}PO₃²⁻, R^{a}HPO₃⁻, R^{a}R^{b}PO₃⁻
• der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻
• der Gruppe der Carbonsäuren der allgemeinen Formel: R^{a}COO⁻
• der Gruppe der Borate der allgemeinen Formel: BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO4)⁻
• der Gruppe der Boronate der allgemeinen Formel: R^{a}BO₂²⁻, R^{a}R^{b}BO⁻
• der Gruppe der Carbonate und Kohlensäureester der allgemeinen Formel: HCO₃⁻, CO₃²⁻, R^{a}CO₃⁻
• der Gruppe der Silikate und Kieselsäuresäureester der allgemeinen Formel: SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻
• der Gruppe der Alkyl- bzw. Arylsilan-Salze der allgemeinen Formel: R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻
• der Gruppe der Carbonsäureimide, Bis(sulfonyl)imide und Sulfonylimide der allgemeinen Formel: 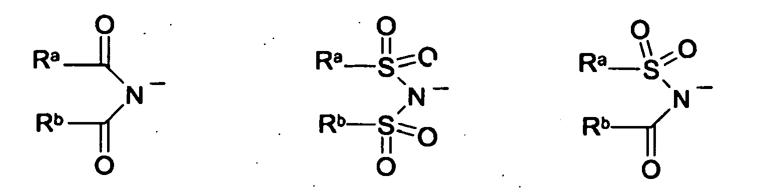
• der Gruppe der Methide der allgemeinen Formel: 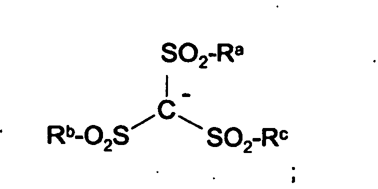
• der Gruppe der Alkoxide und Aryloxide der allgemeinen Formeln: R^{a}O⁻;
• der Gruppe der Halometallate der allgemeinen Formel [M_{q}Halᵣ]^{s-},
   wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt;
• der Gruppe der Sulfide, Hydrogensulfide, Polysulfide, Hydrogenpolysulfide und Thiolate der allgemeinen Formeln:

   S²⁻, HS⁻, [Sᵥ]²⁻, [HSᵥ]⁻, [R^{a}S]⁻,

   wobei v eine ganze positive Zahl von 2 bis 10 ist;
• der Gruppe der komplexen Metallionen wie Fe(CN)₆³⁻, Fe(CN)₆⁴⁻, MnO₄⁻, Fe(CO)₄⁻.

Darin bedeuten R^{a}, R^{b}, R^{c} und R^{d} unabhängig voneinander jeweils Wasserstoff, C₁-C₃₀-Alkyl, gegebenenfalls durch ein oder mehrere nicht-benachbarte Sauerstoff-und/oder Schwefelatome und/oder ein oder mehrere substituierte oder unsubstituierte Iminogruppen unterbrochenes C₂-C₁₈-Alkyl, C₈-C₁₄-Aryl, C₅-C₁₂-Cycloalkyl oder einen fünf- bis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin sind gegebenenfalls durch funktionelle Gruppen, Aryl, Alkyl, Aryloxy, Alkyloxy, Halogen, Heteroatome und/oder Heterocyclen substituiertes C₁-C₁₈-Alkyl beispielsweise Methyl, Ethyl, Propyl, Isopropyl, n-Butyl, sec-Butyl, tert-Butyl, Pentyl, Hexyl, Heptyl, Octyl, 2-Ethylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl sind beispielsweise 5-Hydroxy-3-oxapentyl, 8-Hydroxy-3,6-dioxaoctyl, 11-Hydroxy-3,6,9-trioxaundecyl, 7-Hydroxy-4-oxaheptyl, 11-Hydroxy-4,8-dioxaundecyl, 15-Hydroxy-4,8,12-trioxapentadecyl, 9-Hydroxy-5-oxanonyl, 14-Hydroxy-5,10-oxatetradecyl, 5-Methoxy-3-oxapentyl, 8-Methoxy-3,6-dioxaoctyl, 11-Methoxy-3,6,9-trioxaundecyl, 7-Methoxy-4-oxaheptyl, 11-Methoxy-4,8-dioxa-undecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes C₆-C₁₄-Aryl sind beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes C₅-C₁₂-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein fünf- bis sechsgliedriger, Sauerstoff-, Stickstoff- und/oder Schwefelatome aufweisender Heterocyclus ist beispielsweise Furyl, Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxifuryl, Dimethoxipyridyl, Diflourpyridyl, Methylthiophenyl, Isopropylthiophenyl oder tert.-Butylthiophenyl.

Bevorzugte Anionen sind ausgewählt aus der Gruppe der Halogenide und halogenhaltigen Verbindungen, der Gruppe der Carbonsäuren, der Gruppe der Sulfate, Sulfite und Sulfonate sowie der Gruppe der Phosphate.

Bevorzugte Anionen sind Chlorid, Bromid, Iodid, SCN⁻, OCN⁻, CN⁻, Acetat, C₁-C₄ Alkylsulfate, R^{a}-COO⁻, R^{a}SO₃⁻, R^{a}R^{b}PO₄⁻, Methansulfonate, Tosylat, C₁-C₄ Dialkylphosphate, Hydrogensulfat oder Tetrachloraluminat.

Besonders bevorzugte Anionen sind Cl⁻, CH₃COO⁻ oder CH₃SO₃⁻.

In der ionischen Flüssigkeit liegen Kationen sowie Anionen vor. Innerhalb der ionischen Flüssigkeit wird vom Kation ein Proton oder ein Alkylrest an das Anion übertragen. Hierdurch entstehen zwei neutrale Moleküle. Es liegt also ein Gleichgewicht vor, in welchem Anionen, Kationen und die zwei daraus gebildeten neutralen Moleküle vorliegen.

Vorzugsweise weist die Lösung eine Temperatur von höchstens 180°C auf. Mehr bevorzugt weist die Lösung der vorliegenden Erfindung eine Temperatur von höchstens 160°C, weiterhin mehr bevorzugt von höchstens 120°C und besonders bevorzugt von höchstens 100°C auf.

In einer bevorzugten Ausführungsform beträgt der Anteil an stickstoffhaltiger Base 6 - 20 Gew.-%, mehr bevorzugt 6-15 Gew.-%, weiter mehr bevorzugt 6 bis 14 Gew.-%, weiter mehr bevorzugt 6 bis 13 Gew.-%, insbesondere bevorzugt 6 bis 10 Gew.-%, bezogen auf das Gesamtgewicht der Lösung. Weiterhin bevorzugt ist ein Anteil von 7 bis 14 Gew.-%, insbesondere 8 bis 13 Gew.-%.

Die stickstoffhaltige Base ist vorzugsweise eine Verbindung, deren Stickstoffatom oder -atome primär, sekundär oder tertiär sind und aus den quartären Verbindungen der Formeln (IVa) bis (IVw) hergeleitet ist, wobei der den quartären Stickstoff bildende Rest R nicht vorhanden ist und die übrigen Substituenten unabhängig voneinander die oben angegebene Bedeutung haben und auch gegebenenfalls zusätzlich Wasserstoff sein können.

Vorzugsweise kann die Base aus dem in der ionischen Flüssigkeit vorhandenen Kation, sofern dieses eine quartäre stickstoffhaltige Verbindung ist, hergeleitet sein.
Es ist jedoch auch möglich, dass dies nicht der Fall ist.

Weiterhin bevorzugte Basen sind in DE-A 102 02 838 von Seite 4, Zeile 17 bis Seite 7, Zeile 51 aufgeführt.

Besonders bevorzugte Basen sind Amine, Imidazole, Monoethylamin, Isopropylamin, Ethylhexylamin, Ethanolamin oder Imidazol.

Ein weiterer Gegenstand der vorliegenden Erfindung ist ein Verfahren zur Herstellung einer erfindungsgemäßen Lösung die Schritte enthaltend
- Zugeben von Cellulose zu einer Lösung enthaltend eine ionische Flüssigkeit enthaltend Anionen und Kationen als Lösemittel und 6 bis 30 Gew.-% einer stickstoffhaltigen Base bezogen auf das Gesamtgewicht der Lösung und
- Vermischen der Lösung, bis die Cellulose vollständig aufgelöst ist.

Das Vermischen erfolgt vorzugsweise durch Rühren, Schütteln und/oder mit Hilfe von Mikrowellen.

Vorzugsweise erfolgt das Auflösen innerhalb von 3 Tagen, mehr bevorzugt innerhalb eines Tages und besonders bevorzugt innerhalb von 12 Stunden.

Ein weiterer Gegenstand der vorliegenden Erfindung ist die Verwendung einer Lösung gemäß der vorliegenden Erfindung zur physikalischen oder chemischen Behandlung von Cellulose.

Die chemische Behandlung kann die Oxidation, Reduktion, Pyrolyse, Hydrolyse, Isomerisierung, Veresterung, Alkoxylierung oder Copolymerisation umfassen.

Die vorliegende Erfindung wird durch die nachfolgenden Beispiele näher erläutert.

### Beispiele

Eine Menge einer ionischen Flüssigkeit und eines Amins wird unter Rühren bei 95°C vorgelegt und mit einer Menge Cellulosepulver versetzt. Die Mischung wird bei 95°C gerührt bis sich die Cellulose vollständig gelöst hat. Außerdem wird die dafür benötigte Zeit bestimmt.

Die Ansatzgrößen und Ergebnisse sind in der folgenden Tabelle zusammengefasst.

**BMIM = 1-n-Butyl-3-methylimidazolium**

| Ionische | Menge | Amin | Menge | Menge (Cellulosepulver) | benötigte |
|---|---|---|---|---|---|
| Flüssigkeit | (Ion. FI.) | | (Amin) | | Zeit |
| BMIM Cl | 10,0 g | -- | -- | 0,30 g | 2 h 37 min |
| BMIM Cl | 10,0 g | 1-Methylimidazol | 0,99 g | 0,30 g | 48 min |
| BMIM Cl | 10,0 g | 1-Methylimidazol | 2,00 g | 0,30 g | 28 min |
| BMIM Acetat | 10,0 g | -- | -- | 0,70 g | 63 h |
| BMIM Acetat | 10,0 g | 1-Methylimidazol | 1,00 g | 0,70 g | 24 h |
| BMIM Acetat | 10,0 g | 1-Methylimidazol | 2,06 g | 0,71 g | 6h |

## Patentansprüche

1. Eine Lösung enthaltend Cellulose, eine ionische Flüssigkeit enthaltend Anionen und Kationen als Lösemittel und 6-30 Gew.-% einer stickstoffhaltigen Base bezogen auf das Gesamtgewicht der Lösung, wobei die ionische Flüssigkeit mindestens ein Kation der Formel (IVe) enthält 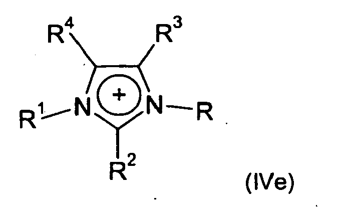 sowie Oligomere, die diese Struktur enthalten, wobei
• der Rest R für Wasserstoff, einen Kohlenstoff enthaltenden organischen, gesättigten oder ungesättigten, acyclischen oder cyclischen, aliphatischen, aromatischen oder
araliphatischen, unsubstituierten oder durch 1 bis 5 Heteroatome oder funktionelle Gruppen unterbrochenen oder substituierten Rest mit 1 bis 20 Kohlenstoffatomen steht; und
• die Reste R¹ bis R⁴ unabhängig voneinander für Wasserstoff, eine SulfoGruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen und wobei die Reste R¹ bis R⁴, welche in der oben genannten Formel (IVe) an ein Kohlenstoffatom (und nicht an ein Heteroatom) gebunden sind, zusätzlich auch für Halogen oder eine funktionelle Gruppe stehen können; oder
zwei benachbarte Reste aus der Reihe R¹ bis R⁴ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen können.

2. Lösung nach Anspruch 1, **dadurch gekennzeichnet, dass** Cellulose mit mehr als 1 Gew.-% bezogen auf das Gesamtgewicht der Lösung in der Lösung enthalten ist.

3. Lösung nach Anspruch 1 oder 2, **dadurch gekennzeichnet, dass** Anionen und Kationen ein Salz der allgemeinen Formel (I) 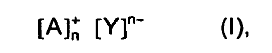 in der n für 1, 2, 3 oder 4 steht, [A]⁺ für ein quartäres Ammonium-Kation der Formel (IVe) und [Y]ⁿ⁻ für ein ein-, zwei-, drei- oder vierwertiges Anion steht;
gemischte Salze der allgemeinen Formeln (II)
[A¹]⁺[A²]⁺ [Y]ⁿ⁻ (IIa),
wobei n = 2;
[A¹]⁺[A²]⁺[A³]⁺ [Y]ⁿ⁻ (IIb),
wobei n = 3; oder
[A¹]⁺[A²]⁺[A³]+[A⁴]⁺ [Y]ⁿ⁻ (IIc),
wobei n = 4 und
wobei [A¹]⁺, [A²]⁺, [A³]⁺ und [A⁴]⁺ unabhängig voneinander aus der für [A]⁺ genannten Formel ausgewählt sind und [Y]ⁿ⁻ die unter (A) genannte Bedeutung besitzt; oder
gemischte Salze der allgemeinen Formeln (III)
[A¹]⁺[A²]⁺[A³]⁺[M¹]⁺ [Y]ⁿ⁻ (IIIa),
wobei n = 4;
[A¹]⁺[A²]⁺[M¹]⁺[M²]⁺[Y]ⁿ⁻ (IIIb),
wobei n = 4;
[A¹]⁺[M¹]⁺[M²]⁺[M³]⁺ [Y]ⁿ⁻ (IIIc),
wobei n = 4;
[A¹]⁺[A²]⁺[M¹]⁺ [Y]ⁿ⁻ (IIId),
wobei n = 3;
[A¹]⁺[M¹]⁺[M²]⁺ [Y]ⁿ⁻ (IIIe),
wobei n = 3;
[A¹]⁺[M¹]⁺ [Y]ⁿ⁻ (IIIf),
wobei n = 2;
[A¹]⁺[A²]⁺[M⁴]²⁺ [Y]ⁿ⁻ (IIIg),
wobei n = 4;
[A¹]⁺[M¹]⁺[M⁴]²⁺ [Y]ⁿ⁻ (IIIh),
wobei n = 4;
[A¹]⁺[M⁵]³⁺ [Y]ⁿ⁻ (IIIi),
wobei n = 4; oder
[A¹]⁺[M⁴]²⁺ [Y]ⁿ⁻ (IIIj),
wobei n = 3 und
wobei [A¹]⁺, [A²]⁺ und [A³]⁺ unabhängig voneinander aus den für [A]⁺ genannten Gruppen ausgewählt sind, [Y]ⁿ⁻ die unter (A) genannte Bedeutung besitzt und (M¹]⁺, [M²]⁺, [M³]⁺ einwertige Metallkationen, [M⁴]²⁺ zweiwertige Metallkationen und [M⁵]³⁺ dreiwertige Metallkationen bedeuten, bilden.

4. Lösung nach einem der Ansprüche 1 bis 3, **dadurch gekennzeichnet, dass** die ionische Flüssigkeit mindestens ein Anion enthält, das ausgewählt ist aus der Gruppe bestehend aus
• der Gruppe der Halogenide und halogenhaltigen Verbindungen der Formel:
F⁻, Cl⁻, Br⁻, I⁻, BF₄⁻, PF₆⁻, AlCl₄⁻, Al₂Cl₇⁻, Al₃Cl₁₀⁻, AlBr₄⁻, FeCl₄⁻, BCl₄⁻, SbF₆⁻, AsF₆,⁻ZnCl₃⁻, ZnCl₃⁻, SnCl₃⁻, CᵤCl₂⁻, CF₃SO₃⁻, (CF₃SO₃)₂N⁻, CF₃CO₂⁻, CCl₃CO₂⁻, CN⁻, SCN⁻, OCN⁻,
• der Gruppe der Sulfate, Sulfite und Sulfonate der allgemeinen Formel:
SO₄²⁻, HSO₄⁻, SO₃²⁻, HSO₃⁻, R^{a}OSO₃⁻, R^{a}SO₃⁻,
• der Gruppe der Phosphate der allgemeinen Formel
PO₄³⁻, HPO₄²⁻, H₂PO₄⁻, R^{a}PO₄²⁻, HR^{a}PO₄⁻, R^{a}R^{b}PO₄⁻,
• der Gruppe der Phosphonate und Phosphinate der allgemeinen Formel:
R^{a}HPO₃⁻,R^{a}R^{b}PO₂⁻, R^{a}R^{b}PO₃⁻,
• der Gruppe der Phosphite der allgemeinen Formel:
PO₃³⁻, HPO₃²⁻, H₂PO₃⁻, R^{a}PO₃²⁻, R^{a}HPO₃⁻, R^{a}R^{b}PO₃⁻,
• der Gruppe der Phosphonite und Phosphinite der allgemeinen Formel:
R^{a}R^{b}PO₂⁻, R^{a}HPO₂⁻, R^{a}R^{b}PO⁻, R^{a}HPO⁻,
• der Gruppe der Carbonsäuren der allgemeinen Formel:
R^{a}COO⁻,
• der Gruppe der Borate der allgemeinen Formel:
BO₃³⁻, HBO₃²⁻, H₂BO₃⁻, R^{a}R^{b}BO₃⁻, R^{a}HBO₃⁻, R^{a}BO₃²⁻ , B(OR^{a})(OR^{b})(OR^{c})(OR^{d})⁻, B(HSO₄)⁻, B(R^{a}SO4)⁻,
• der Gruppe der Boronate der allgemeinen Formel:
R^{a}BO₂²⁻, R^{a}R^{b}BO⁻,
• der Gruppe der Carbonate und Kohlensäureester der allgemeinen Formel:
HCO₃⁻, CO₃²⁻, R^{a}CO₃⁻,
• der Gruppe der Silikate und Kieselsäuresäureester der allgemeinen Formel:
SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻.
• der Gruppe der Alkyl- bzw. Arylsilan-Salze der allgemeinen Formel:
R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻,
• der Gruppe der Carbonsäureimide, Bis(sulfonyl)imide und Sulfonylimide der allgemeinen Formel: 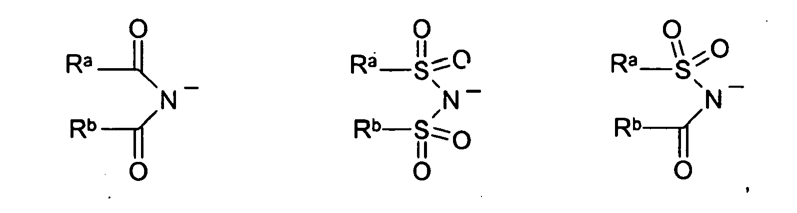
• der Gruppe der Methide der allgemeinen Formel: 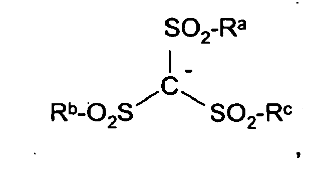
• der Gruppe der Alkoxide und Aryloxide der allgemeinen Formel R^{a}O⁻,
• der Gruppe der Halometallate der allgemeinen Formel
[M_{q}Halᵣ]^{s-},
wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt;
• der Gruppe der Sulfide, Hydrogensulfide, Polysulfide, Hydrogenpolysulfide und Thiolate der allgemeinen Formeln:
S²⁻, HS⁻, [Sᵥ]²⁻, [HSᵥ]⁻, [R^{a}S]⁻,
wobei v eine ganze positive Zahl von 2 bis 10 ist; und
• der Gruppe der komplexen Metallionen wie Fe(CN)₆³⁻, Fe(CN)₆⁴⁻, MnO₄⁻, Fe(CO)₄⁻, wobei
R^{a}, R^{b}, R^{c} und R^{d} unabhängig voneinander jeweils Wasserstoff, C₁-C₁₈-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl oder einen fünf- bis sechsgliedrigen, Sauerstoff-, Stickstoff- und/oder Schwefelatome aufweisenden Heterocyclus sind, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

5. Lösung nach einem der Ansprüche 1 bis 4, **dadurch gekennzeichnet, dass** die Lösung eine Temperatur von höchstens 180°C aufweist.

6. Lösung nach einem der Ansprüche 1 bis 5, **dadurch gekennzeichnet, dass** der Anteil der stickstoffhaltigen Base 6-20 Gew.-% bezogen auf das Gesamtgewicht der Lösung beträgt.

7. Lösung nach einem der Ansprüche 1 bis 6, **dadurch gekennzeichnet, dass** die stickstoffhaltige Base eine Verbindung ist, deren Stickstoffatom oder -atome primär, sekundär oder tertiär sind und aus den quartären Verbindungen der Formel (IVe) hergeleitet ist, wobei der den quartären Stickstoff der quartären Verbindungen bildende Rest R nicht vorhanden ist und die übrigen Substituenten unabhängig voneinander die in Anspruch 1 angegebene Bedeutung haben und auch gegebenenfalls zusätzlich Wasserstoff sein können.

8. Verfahren zur Herstellung einer Lösung nach einem der Ansprüche 1 bis 7 die Schritte enthaltend
a. Zugeben von Cellulose zu einer Lösung enthaltend eine ionische Flüssigkeit enthaltend Anionen und Kationen wie in Anspruch 1 definiert als Lösemittel und 6 bis 30 Gew.-% einer stickstoffhaltigen Base bezogen auf das Gesamtgewicht der Lösung und
b. Vermischen der Lösung, bis die Cellulose vollständig aufgelöst ist.

9. Verwendung einer Lösung nach einem der Ansprüche 1 bis 7 zur physikalischen oder chemischen Behandlung von Cellulose.

## Claims

1. A solution comprising cellulose, an ionic liquid comprising anions and cations as solvent and 6 - 30% by weight of a nitrogen-comprising base, based on the total weight of the solution, wherein the ionic liquid comprises at lest one cation of the formula (IVe). 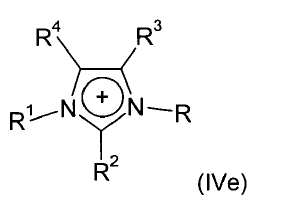 and oligomers comprising this structure, where
• the radical R is hydrogen, a carbon-comprising organic, saturated or unsaturated, acyclic or cyclic, aliphatic, aromatic or araliphatic radical which has from 1 to 20 carbon atoms and is unsubstituted or interrupted by from 1 to 5 heteroatoms or functional groups or substituted; and
• the radicals R¹ to R⁴ are each, independently of one another, hydrogen, a sulfo group or a carbon-comprising organic, saturated or unsaturated, acyclic or cyclic, aliphatic, aromatic or araliphatic radical which has from 1 to 20 carbon atoms and is unsubstituted or interrupted by from 1 to 5 heteroatoms or functional groups or substituted, with the radicals R¹ to R⁴ which are bound to a carbon atom (and not to a heteroatom) in the abovementioned formula (IVe) also being able to be halogen or a functional group; or
two adjacent radicals from the group consisting of R¹ to R⁴ can together also be a divalent, carbon-comprising organic, saturated or unsaturated, acyclic or cyclic, aliphatic, aromatic or araliphatic radical which has from 1 to 30 carbon atoms and is unsubstituted or interrupted by from 1 to 5 heteroatoms or functional groups or substituted.

2. The solution according to claim 1, wherein more than 1% by weight of cellulose, based on the total weight of the solution, is comprised in the solution.

3. The solution according to claim 1 or 2, wherein anions and cations form a salt of the general formula (I) 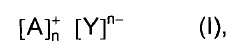 where n is 1, 2, 3 or 4, [A]⁺ is a quaternary ammonium cation of the formula (IVe) and [Y]ⁿ⁻ is a monovalent, divalent, trivalent or tetravalent anion;
mixed salts of the general formulae (II)
[A¹]⁺[A²]⁺ [Y]ⁿ⁻ (IIa),
wobei n = 2;
[A¹]⁺[A²]⁺[A³]⁺ [Y]ⁿ⁻ (IIb),
wobei n = 3; oder
[A¹]⁺[A²]⁺[A³]+[A⁴]⁺ [Y]ⁿ⁻ (IIc),
wobei n = 4 und
where [A¹]⁺, [A²]⁺, [A³]⁺ and [A⁴]⁺ are selected independently from among the formula mentioned for [A]⁺, and [Y]ⁿ⁻ is as defined under (A); or
mixed salts of the general formulae (III)
[A¹]⁺[A²]⁺[A³]⁺[M¹]⁺ [Y]ⁿ⁻ (IIIa),
wobei n = 4;
[A¹]⁺[A²]⁺[M¹]⁺[M²]⁺[Y]ⁿ⁻ (IIIb),
wobei n = 4;
[A¹]⁺[M¹]⁺[M²]⁺[M³]⁺ [Y]ⁿ⁻ (IIIc),
wobei n = 4;
[A¹]⁺[A²]⁺[M¹]⁺ [Y]ⁿ⁻ (IIId),
wobei n = 3;
[A¹]⁺[M¹]⁺[M²]⁺ [Y]ⁿ⁻ (IIIe),
wobei n = 3;
[A¹]⁺[M¹]⁺ [Y]ⁿ⁻ (IIIf),
wobei n = 2;
[A¹]⁺[A²]⁺[M⁴]²⁺ [Y]ⁿ⁻ (IIIg),
wobei n = 4;
[A¹]⁺[M¹]⁺[M⁴]²⁺ [Y]ⁿ⁻ (IIIh),
wobei n = 4;
[A¹]⁺[M⁵]³⁺ [Y]ⁿ⁻ (IIIi),
wobei n = 4; oder
[A¹]⁺[M⁴]²⁺ [Y]ⁿ⁻ (IIIj),
wobei n = 3 und
where [A¹]⁺, [A²]⁺ and [A³]⁺ are selected independently from among the groups mentioned for [A]⁺, [Y]ⁿ⁻ is as defined under (A) and [M¹]⁺, [M²]⁺, [M³]⁺ are monovalent metal cations, [M⁴]²⁺ is a divalent metal cation and [M⁵]³⁺ is a trivalent metal cation.

4. The solution according to any of claims 1 to 3, wherein the ionic liquid comprises at least one anion selected from the group consisting of
• the group of halides and halogen compounds of the formulae:
F⁻, CI⁻, Br⁻, I⁻, BF₄⁻, PF₆⁻, AlCl₄⁻, Al₂Cl₇⁻, Al₃C₁₀⁻, AlBr₄⁻, FeCl₄⁻, BCl₄⁻, SbF₆⁻, AsF₆,⁻ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻
• the group of sulfates, sulfites and sulfonates of the general formulae:
SO₄²⁻, HSO₄⁻, SO₃²⁻, HSO₃⁻, R^{a}OSO₃⁻, R^{a}SO₃⁻
• the group of phosphates of the general formulae
PO₄³⁻, HPO₄²⁻, H₂PO₄⁻, R^{a}PO₄²⁻, HR^{a}PO₄⁻, R^{a}R^{b}PO₄⁻
• the group of phosphonates and phosphinates of the general formulae:
R^{a}HPO₃⁻,R^{a}R^{b}PO₂⁻, R^{a}R^{b}PO₃⁻
• the group of phosphites of the general formulae:
PO₃³⁻, HPO₃²⁻, H₂PO₃⁻, R^{a}PO₃²⁻, R^{a}HPO₃⁻, R^{a}R^{b}PO₃⁻
• the group of phosphonites and phosphinites of the general formulae:
R^{a}R^{b}PO₂⁻, R^{a}HPO₂⁻, R^{a}R^{b}PO⁻, R^{a}HPO⁻
• the group of carboxylic acids of the general formula:
R^{a}COO⁻
• the group of borates of the general formulae:
BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO4)⁻
• the group of boronates of the general formulae:
R^{a}BO₂²⁻, R^{a}R^{b}BO⁻
• the group of carbonates and carbonic esters of the general formulae:
HCO₃⁻, CO₃²⁻, R^{a}CO₃⁻
• the group of silicates and silicic esters of the general formulae:
SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻
• the group of alkyl silane and aryl silane salts of the general formulae:
R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻
• the group of carboximides, bis(sulfonyl)imides and sulfonylimides of the general formulae: 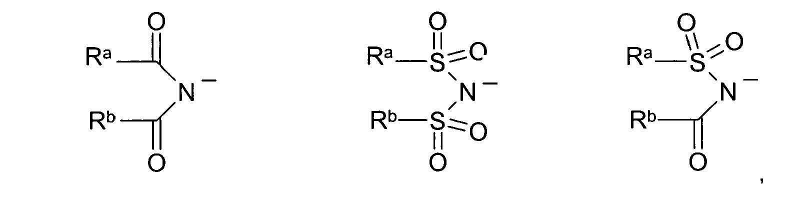
• the group of methides of the general formula: 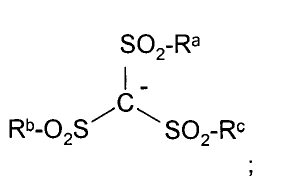
• the group of alkoxides and aryloxides of the general formula
R^{a}O⁻;
• the group of halometalates of the general formula
[M_{q}Halᵣ]^{s-},
where M is a metal and Hal is fluorine, chlorine, bromine or iodine, q and r are positive integers and indicate the stoichiometry of the complex and s is a positive integer and indicates the charge on the complex;
• the group of sulfides, hydrogen sulfides, polysulfides, hydrogen polysulfides and thiolates of the general formulae:
S²⁻, HS⁻, [Sᵥ]²⁻, [HSᵥ]⁻, [R^{a}S]⁻,
where v is a positive integer from 2 to 10; and
• the group of complex metal ions such as Fe(CN)₆³⁻, Fe(CN)₆⁴⁻, MnO₄⁻, Fe(CO)₄⁻, where
R^{a}, R^{b}, R^{c} and R^{d} are each, independently of one another, hydrogen, C₁-C₁₈-alkyl, C₂-C₁₈-alkyl which is optionally interrupted by one or more nonadjacent oxygen and/or sulfur atoms and/or one or more substituted or unsubstituted imino groups, C₆-C₁₄-aryl, C₅-C₁₂-cycloalkyl or a five- or six-membered, oxygen-, nitrogen- and/or sulfur-comprising heterocycle, where two of them may together form an unsaturated, saturated or aromatic ring which is optionally interrupted by one or more oxygen and/or sulfur atoms and/or one or more unsubstituted or substituted imino groups, where the radicals mentioned may each be additionally substituted by functional groups, aryl, alkyl, aryloxy, alkyloxy, halogen, heteroatoms and/or heterocycles.

5. The solution according to any of claims 1 to 4 which has a temperature of not more than 180°C.

6. The solution according to any of claims 1 to 5, wherein the proportion of the nitrogen-comprising base is 6 - 20% by weight, based on the total weight of the solution.

7. The solution according to any of claims 1 to 6, wherein the nitrogen-comprising base is a compound whose nitrogen atom or atoms is/are primary, secondary or tertiary and which is derived from the quaternary compounds of the formula (IVe), with the radical R forming the quaternary nitrogen of the quaternary compounds not being present and the other substituents having, independently of one another, the meanings given in claim 1, and also being able, if appropriate, to be hydrogen.

8. A process for preparing a solution according to any of claims 1 to 7, which comprises the steps
a. addition of cellulose to a solution comprising an ionic liquid comprising anions and cations as defined in claim 1 as solvent and from 6 to 30% by weight of a nitrogen-comprising base, based on the total weight of the solution, and
b. mixing of the solution until the cellulose is completely dissolved.

9. The use of a solution according to any of claims 1 to 7 for the physical or chemical treatment of cellulose.

## Revendications

1. Solution contenant de la cellulose, un liquide ionique contenant des anions et des cations comme solvant et 6-30% en poids d'une base azotée par rapport au poids total de la solution, le liquide ionique contenant au moins un cation de formule (IVe) 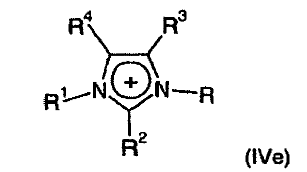 ainsi que des oligomères contenant cette structure, où
- le radical R représente hydrogène, un radical contenant du carbone, organique, saturé ou insaturé, acyclique ou cyclique, aliphatique, aromatique ou araliphatique, non substitué ou interrompu ou substitué par 1 à 5 hétéroatomes ou groupes fonctionnels, comprenant 1 à 20 atomes de carbone ; et
- les radicaux R¹ à R⁴ représentent, indépendamment l'un de l'autre, hydrogène, un groupe sulfo ou un radical contenant du carbone, organique, saturé ou insaturé, acyclique ou cyclique, aliphatique, aromatique ou araliphatique, non substitué ou interrompu ou substitué par 1 à 5 hétéroatomes ou groupes fonctionnels, comprenant 1 à 20 atomes de carbone et les radicaux R¹ à R⁴, qui sont liés dans la formule susmentionnée (IVe) à un atome de carbone (et non pas à un hétéroatome), peuvent en outre également représenter halogène ou un groupe fonctionnel ; ou
deux radicaux adjacents de la série R¹ à R⁴ peuvent également représenter, ensemble, un radical divalent contenant du carbone, organique, saturé ou insaturé, acyclique ou cyclique, aliphatique, aromatique ou araliphatique, non substitué ou interrompu ou substitué par 1 à 5 hétéroatomes ou groupes fonctionnels, comprenant 1 à 30 atomes de carbone.

2. Solution selon la revendication 1, **caractérisée en ce que** la cellulose est contenue dans la solution à raison de plus de 1% en poids par rapport au poids total de la solution.

3. Solution selon la revendication 1 ou 2, **caractérisée en ce que** les anions et les cations forment un sel de formule générale (I)
[A]⁺ₙ[Y]ⁿ⁻ (I)
dans laquelle n vaut 1, 2, 3 ou 4, [A]⁺ représente un cation ammonium quaternaire de formule (IVe) et [Y]ⁿ⁻représente un anion monovalent, divalent, trivalent ou tétravalent ;
des sels mixtes des formules générales (II)
[A¹]⁺[A²]⁺ [Y]ⁿ⁻ (IIa),
wobei n = 2;
[A¹]⁺[A²]⁺[A³]⁺ [Y]ⁿ⁻ (IIb),
wobei n = 3; oder
[A¹]⁺[A²]⁺[A³]+[A⁴]⁺ [Y]ⁿ⁻ (IIc),
wobei n = 4 und
où [A¹]⁺, [A²]⁺, [A³]⁺ et [A⁴]⁺ sont choisis, indépendamment l'un de l'autre, parmi les formules mentionnées pour [A]⁺ et [Y]ⁿ⁻ a la signification mentionnée sous (A) ; ou
des sels mixtes des formules générales (III)
[A¹]⁺[A²]⁺[A³]⁺[M¹]⁺ [Y]ⁿ⁻ (IIIa),
wobei n = 4;
[A¹]⁺[A²]⁺[M¹]⁺[M²]⁺[Y]ⁿ⁻ (IIIb),
wobei n = 4;
[A¹]⁺[M¹]⁺[M²]⁺[M³]⁺ [Y]ⁿ⁻ (IIIc),
wobei n = 4;
[A¹]⁺[A²]⁺[M¹]⁺ [Y]ⁿ⁻ (IIId),
wobei n = 3;
[A¹]⁺[M¹]⁺[M²]⁺ [Y]ⁿ⁻ (IIIe),
wobei n = 3;
[A¹]⁺[M¹]⁺ [Y]ⁿ⁻ (IIIf),
wobei n = 2;
[A¹]⁺[A²]⁺[M⁴]²⁺ [Y]ⁿ⁻ (IIIg),
wobei n = 4;
[A¹]⁺[M¹]⁺[M⁴]²⁺ [Y]ⁿ⁻ (IIIh),
wobei n = 4;
[A¹]⁺[M⁵]³⁺ [Y]ⁿ⁻ (IIIi),
wobei n = 4; oder
[A¹]⁺[M⁴]²⁺ [Y]ⁿ⁻ (IIIj),
wobei n = 3 und
où [A¹]⁺, [A²]⁺ et [A³]⁺ sont choisis, indépendamment l'un de l'autre parmi les groupes mentionnés pour [A]⁺, [Y]ⁿ⁻ présente la signification mentionnée sous (A) et [M¹]⁺, [M²]⁺, [M³]⁺ signifient des cations métalliques monovalents, [M⁴]²⁺ des cations métalliques divalents et [M⁵]³⁺ des cations métalliques trivalents.

4. Solution l'une quelconque des revendications 1 à 3, **caractérisée en ce que** le liquide ionique contient au moins un anion, qui est choisi dans le groupe constitué par
- le groupe des halogénures et des composés halogénés de formule :
F⁻, Cl⁻, Br⁻, I⁻, BF₄⁻, PF₆⁻, AlCl₄⁻, Al₂Cl₇⁻, Al₃Cl₁₀⁻. AlBr₄⁻, FeCl₄⁻, BCl₄⁻, SbF₆⁻, AsF₆⁻, ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻,
- le groupe des sulfates, sulfites et sulfonates de formule générale :
SO₄²⁻, HSO₄⁻, SO₃²⁻, HSO₃⁻, R^{a}OSO₃⁻, R^{a}SO₃⁻,
- le groupe des phosphates de formule générale :
PO₄³⁻, HPO₄²⁻, H₂PO₄⁻, R^{a}PO₄²⁻, HR^{a}PO₄⁻, R^{a}R^{b}PO₄⁻,
- le groupe des phosphonates et des phosphinates de formule générale :
R^{a}HPO₃⁻, R^{a}R^{b}PO₂⁻, R^{a}R^{b}PO₃⁻,
- le groupe des phosphites de formule générale :
PO₃³⁻, HPO₃²⁻, H₂PO₃⁻, R^{a}PO₃²⁻, R^{a}HPO₃⁻, R^{a}R^{b}PO₃⁻,
- le groupe des phosphonites et des phosphinites de formule générale :
R^{a}R^{b}PO₂⁻, R^{a}HPO₂⁻, R^{a}R^{b}PO⁻, R^{a}HPO⁻,
- le groupe des acides carboxyliques de formule générale :
R^{a}COO⁻,
- le groupe des borates de formule générale :
BO₃³⁻, HBO₃²⁻, H₂BO₃⁻, R^{a}R^{b}BO₃⁻, R^{a}HBO₃, R^{a}BO₃²⁻, B(OR^{a})(OR^{b})(OR^{c})(OR^{d})⁻, B(HSO₄)⁻, B(R^{a}SO₄)⁻,
- le groupe des boronates de formule générale :
R^{a}BO₂²⁻, R^{a}P^{b}BO⁻,
- le groupe des carbonates et des esters d'acide carbonique de formule générale :
HCO₃⁻, CO₃²⁻, R^{a}CO₃⁻,
- le groupe des silicates et des esters d'acide silicique de formule générale :
SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻,
- le groupe des sels d'alkylsilane ou d'arylsilane de formule générale :
R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻,
- le groupe des imides d'acide carboxylique, des bis(sulfonyl)imides et des sulfonylimides de formule générale : 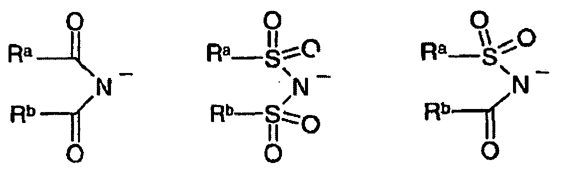
- le groupe des méthides de formule générale : 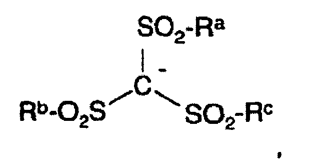
- le groupe des alcoxydes et des aryloxydes de formule générale R^{a}O⁻,
- le groupe des halogénométallates de formule générale
[M_{q}Halᵣ]^{s-},
où M représente un métal et Hal représente fluor, chlore, brome ou iode, q et r sont des nombres entiers positifs et indiquent la stoechiométrie du complexe et s est un nombre positif entier et indique la charge du complexe ;
- le groupe des sulfures, hydrogénosulfures, polysulfures, hydrogénopolysulfures et thiolates des formules générales :
S²⁻, HS⁻, [Sᵥ]²⁻, [HSᵥ]⁻, [R^{a}S]⁻,
où v vaut un nombre entier positif de 2 à 10 ; et
- le groupe des ions métalliques complexes tels que Fe(CN)₆³⁻, Fe(CN)₆⁴⁻, MnO₄⁻, Fe(CO)₄⁻, où
R^{a}, R^{b}, P^{c} et R^{d} représentent, indépendamment l'un de l'autre, à chaque fois hydrogène, alkyle en C₁-C₁₈, alkyle en C₂-C₁₈ le cas échéant interrompu par un ou plusieurs atomes d'oxygène et/ou de soufre non adjacents et/ou par un ou plusieurs groupes imino substitués ou non substitués, C₆-C₁₄-aryle, C₅-C₁₂-cycloalkyle, ou un hétérocycle de cinq ou six chaînons, présentant des atomes d'oxygène, d'azote et/ou de soufre où deux de ceux-ci peuvent former ensemble un cycle insaturé, saturé ou aromatique, le cas échéant interrompu par un ou plusieurs atomes d'oxygène et/ou de soufre et/ou par un ou plusieurs groupes imino substitués ou non substitués, les radicaux mentionnés pouvant à chaque fois être substitués en plus par des groupes fonctionnels, aryle, alkyle, aryloxy, alkyloxy, halogène, des hétéroatomes et/ou des hétérocycles.

5. Solution l'une quelconque des revendications 1 à 4, **caractérisée en ce que** la solution présente une température d'au plus 180°C.

6. Solution l'une quelconque des revendications 1 à 5, **caractérisée en ce que** la proportion de base azotée représente 6-20% en poids par rapport au poids total de la solution.

7. Solution l'une quelconque des revendications 1 à 6, **caractérisée en ce que** la base azotée est un composé dont le ou les atomes d'azote sont primaires, secondaires ou tertiaires et qui est dérivé des composés quaternaires de formule (IVe), le radical R formant l'azote quaternaire des composés quaternaires n'étant pas présent et les autres substituants présentant, indépendamment l'un de l'autre, la signification indiquée dans la revendication 1 et pouvant le cas échéant en outre représenter hydrogène.

8. Procédé pour la préparation d'une solution selon l'une quelconque des revendications 1 à 7, comprenant les étapes
a. addition de cellulose à une solution contenant un liquide ionique contenant des anions et des cations tel que défini dans la revendication 1 comme solvant et 6 à 30% en poids d'une base azotée par rapport au poids total de la solution et
b. mélange de la solution jusqu'à ce que la cellulose soit complètement dissoute.

9. Utilisation d'une solution selon l'une quelconque des revendications 1 à 7 pour le traitement physique ou chimique de la cellulose.
